# EUROPEAN PATENT APPLICATION

(11) **EP 3 654 598 A1**
(43) Date of publication of application: **20.05.2020**
(21) Application number: 17917286.1
(22) Date of filing: 10.07.2017
(51) Int. Cl.: H04L 27/26, H04W 72/04, H04W 88/02

(54) **USER TERMINAL AND WIRELESS COMMUNICATION METHOD**

(71) Applicant: NTT DOCOMO, INC., Chiyoda-ku Tokyo 100-6150 (JP)
(72) Inventor: MOROGA, Hideyukiq, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/025187
(87) International publication number: WO 2019/012595

(57) **Abstract**

This user terminal (20) is provided with: a reception unit (202) which receives, from a wireless base station, a downlink signal including a downlink control signal and a downlink data signal; and a demodulation/decoding unit (206) which uses the downlink control signal to demodulate and decode the downlink data signal. The downlink signal is divided into a plurality of unit intervals serving as units in which the demodulation/decoding unit (206) performs processing. Specific unit intervals in which the downlink control signal and the downlink data signal are mapped are included in the plurality of unit intervals. The demodulation/decoding unit (206) uses the downlink control signal mapped in the specific unit intervals, to demodulate and decode the downlink data signal mapped in the same specific unit intervals.

## Description

### Technical Field

The present invention relates to a user terminal and a radio communication method.

### Background Art

Long Term Evolution (LTE) has been specified for achieving a higher data rate, lower latency, and the like in a Universal Mobile Telecommunications System (UMTS) network (see Non-Patent Literature (hereinafter referred to as "NPL") 1). Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT)), and the like.

In the specification of LTE, Orthogonal Frequency Division Multiplexing (OFDM) as a communication method of a downlink has been adopted. In the case of OFDM, in a resource block constituted by 14 symbols, regions of physical control channels (for example, Physical Downlink Control Channels (PDCCHs)) including control signals and physical data channels (for example, Physical downlink Shared channels (PDSCHs)) including data signals are defined for each symbol (see Non-Patent Literatures 2 and 3 (hereinafter referred to as "NPL") 2 and 3).

In the next-generation mobile communication system (for example, 5G), beamforming (BF) performed by using a Massive Multiple Input Multiple Output (MIMO) technique using multiple antennas (for example, 100 elements or more) in a high-frequency range (for example, 5 GHz or more) in order to further increase the speed of signal transmission and reduce interference has been examined.

In the next-generation mobile communication system, there is a need for reduction in Peak to Average Power Ratio (PAPR). Accordingly, in the 5G, there is a possibility that a single-carrier transmission method having a low PAPR will be adopted as the communication method of the downlink. In the single-carrier transmission method, since signals are mapped in the time domain, it is not necessary to define the physical control channels and the physical data channels for each symbol.

### Citation List

### Non-Patent Literature

NPL 1 3GPP TS 36.300 v14.3.0, "Evolved Universal Terrestrial Radio Access (E-UTRA) and Evolved Universal Terrestrial Radio Access Network (E-UTRAN); Overall description; Stage 2 (Release 14)," June 2017
NPL 2 3GPP TS 36.211 v14.2.0, "Evolved Universal Terrestrial Radio Access (E-UTRA); Physical channels and modulation (Release 14)," March 2017
NPL 3 3GPP TS 36.213 v14.2.0, "Evolved Universal Terrestrial Radio Access (E-UTRA); Physical layer procedures (Release 14)," March 2017

### Summary of Invention

### Technical Problem

In the single-carrier transmission method, a method of achieving the flexible configuration of the physical control channels and the physical data channels has not been examined, and there is a limitation on frequency utilization efficiency in the method of the related art.

An object of an aspect of the present invention is to provide a user terminal and a radio communication method capable of achieving the flexible configuration of physical control channels and physical data channels in a single-carrier transmission method.

### Solution to Problem

A user terminal according to one aspect of the present invention includes: a reception section that receives a downlink signal including a downlink control signal and a downlink data signal from a radio base station; and a demodulation and decoding section that performs demodulation and decoding on the downlink data signal, using the downlink control signal, in which the downlink signal is divided into a plurality of unit periods each serving as a unit in which the demodulation and decoding section performs processing, the plurality of unit periods include a specific unit period to which the downlink control signal and the downlink data signal are mapped, and the demodulation and decoding section performs the demodulation and decoding on the downlink data signal mapped to the specific unit period, using the downlink control signal mapped to the specific unit period.

### Advantageous Effects of Invention

According to one aspect of the present invention, it is possible to achieve the flexible configuration of physical control channels and physical data channels in a single-carrier transmission method.

### Brief Description of Drawings

FIG 1 is a block diagram illustrating an example of the entire configuration of a radio base station according to an embodiment of the present invention;
FIG 2 is a block diagram illustrating an example of the entire configuration of a user terminal according to the embodiment of the present invention;
FIG. 3 is a diagram illustrating an example of the configuration of transmission signals including physical control channels and physical data channels;
FIG. 4 is a diagram illustrating the configuration of transmission signals according to a first example of the present embodiment;
FIG. 5 is a diagram illustrating the configuration of transmission signals according to a second example of the present embodiment; and
FIG. 6 is a diagram illustrating an example of a hardware configuration of the radio base station and the user terminal according to the embodiment of the present invention.

### Description of Embodiments

Hereinafter, an embodiment of the present invention will be described in detail with reference to the accompanying drawings.

### (Embodiment)

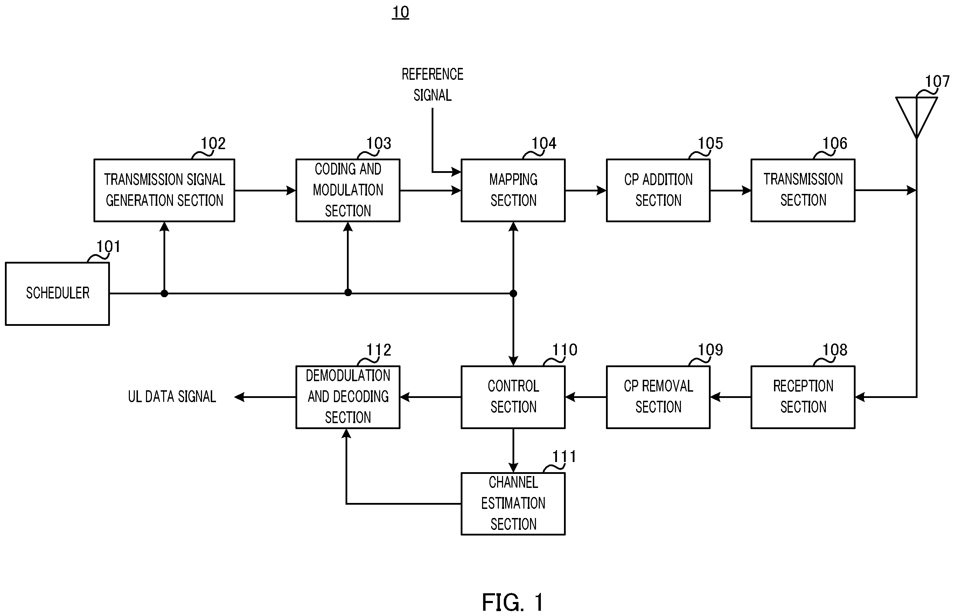

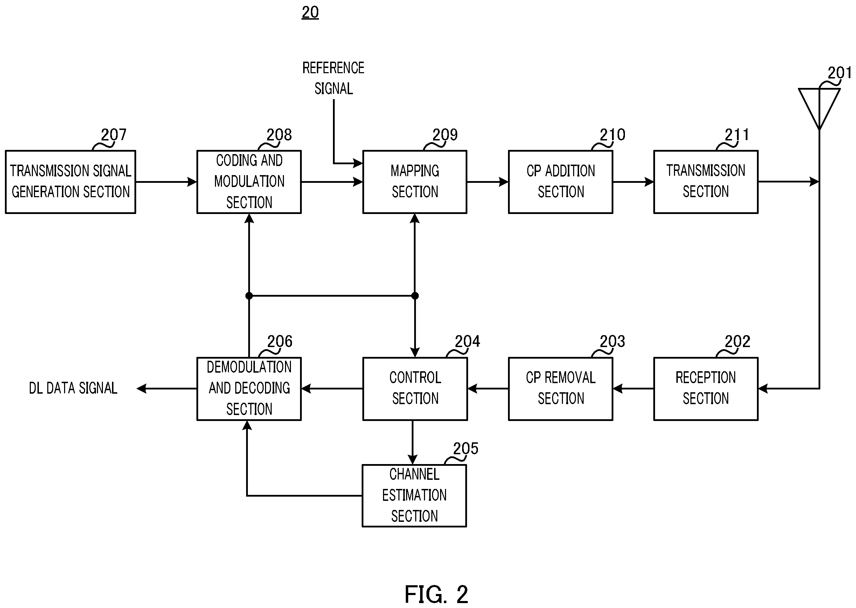

A radio communication system according to the present embodiment includes at least radio base station 10 illustrated in FIG. 1 and user terminal 20 (for example, referred to as "User Equipment (UE)") illustrated in FIG. 2. User terminal 20 is connected to radio base station 10.

Radio base station 10 transmits, to user terminal 20, downlink (DL) control signals including Downlink Control Information (DCI) by using physical control channels (for example, Physical Downlink Control Channels (PDCCHs)) of a DL, and transmits DL data signals and Demodulation Reference Signals (DMRSs) for demodulating the DL data signals by using physical data channels (for example, Physical Downlink Shared Channels (PDSCHs)) of the DL. User terminal 20 transmits, to radio base station 10, uplink (UL) control signals including Uplink Control Information (UCI) by using physical control channels (for example, Physical Uplink Control Channels (PUCCHs)) of an UL or physical data channels (for example, Physical Uplink Shared Channels (PUSCHs)) of the UL, and transmits UL data signals and DMRSs by using physical data channels (for example, Physical Uplink Shared Channels (PUSCHs)) of the UL.

Note that, the channels of the DL and the channels of the UL transmitted and received by radio base station 10 and user terminal 20 are not limited to the PDCCHs, the PDSCHs, the PUCCHs, the PUSCHs, and the like, and may be, for example, other channels such as a Physical Broadcast Channels (PBCHs) and Random Access Channels (RACHs).

An example in which a single carrier is used for performing communication between radio base station 10 and user terminal 20 will be described in the present embodiment. The present invention may use Discrete Fourier Transform (DFT)-Spread-Orthogonal Frequency Division Multiplexing (OFDM) (DFT-S-OFDM) as a method of the single carrier.

### <Radio Base Station>

FIG. 1 is a block diagram illustrating an example of the entire configuration of radio base station 10 according to the embodiment of the invention. Radio base station 10 illustrated in FIG. 1 includes scheduler 101, transmission signal generation section 102, coding and modulation section 103, mapping section 104, CP addition section 105, transmission section 106, antenna 107, reception section 108, CP removal section 109, control section 110, channel estimation section 111, and demodulation and decoding section 112.

Scheduler 101 performs scheduling (for example, resource allocation) of the DL signals (the DL data signals, the DL control signals, the DMRSs, and the like). Scheduler 101 performs scheduling (for example, resource allocation) of the UL signals (the UL data signals, the UL control signals, the DMRSs, and the like).

When the communication between radio base station 10 and user terminal 20 is performed by using the single carrier, scheduler 101 performs scheduling for allocating the signals to radio resources in the time domain (time direction) of the single carrier. Note that, in the scheduling, scheduler 101 performs scheduling on the radio resource in the time domain divided according to a length of a unit period of signal processing (for example, demodulation and decoding processing in demodulation and decoding section 206 of user terminal 20 to be described below). For example, when Cyclic Prefixes (CPs) are added in CP addition section 105 to be described below, the length of the unit period of the signal processing refers to the length of the radio resource in the time domain divided by the CP. Hereinafter, the radio resource of this unit period is referred to as a "block".

Note that, although one period which is the unit period of the signal processing and is separated by the CP is referred to as the block, the present invention is not limited thereto. For example, the name indicating the unit period of the signal processing is not limited to the block, and may be referred to as a symbol, a frame, a subframe, a slot, a mini slot, a tone, a component, a resource block, an element, a resource element, or the like. The unit period of the signal processing may not be separated by the CP, and may be continuous on a time axis.

In the scheduling, scheduler 101 configures transmission periods of the physical control channels of the DL and transmission periods of the physical data channels of the DL in the blocks. Scheduler 101 performs the scheduling of the DL signals in the transmission periods.

Note that, scheduler 101 may configure reception periods of the physical control channels of the UL and reception periods of the physical data channels of the UL in the blocks. In this case, scheduler 101 performs the scheduling of the UL signals in the configured reception periods.

Note that, a specific example of the configuration of the physical control channels and the physical data channels will be described below.

Scheduler 101 outputs scheduling information including information of the resource allocation to transmission signal generation section 102 and mapping section 104.

For example, scheduler 101 configures Modulation and Coding Scheme (MCS) (a coding rate, a modulation scheme, or the like) of the DL data signals and the UL data signals based on channel quality between radio base station 10 and user terminal 20, and outputs MCS information to transmission signal generation section 102 and coding and modulation section 103. Note that, the MCS may not be configured by radio base station 10, and may be configured by user terminal 20. When user terminal 20 configures the MCS, radio base station 10 may receive the MCS information from user terminal 20 (not illustrated).

Transmission signal generation section 102 generates the DL signals including the DL data signals and the DL control signals. For example, Downlink Control Information (DCI) including the scheduling information (for example, the resource allocation information of the DL data signals) or the MCS information output from scheduler 101 is included in the DL control signals. Transmission signal generation section 102 outputs the generated transmission signals to coding and modulation section 103.

For example, coding and modulation section 103 performs coding processing and modulation processing for the transmission signals input from transmission signal generation section 102 based on the MCS information input from scheduler 101. Coding and modulation section 103 outputs the modulated transmission signals to mapping section 104.

Mapping section 104 maps the transmission signals input from coding and modulation section 103 to a predetermined radio resource based on the scheduling information (for example, the resource allocation of the DL) input from scheduler 101. Mapping section 104 maps the reference signals (for example, the DMRSs) to a predetermined radio resource based on the scheduling information. Mapping section 104 outputs the DL signals mapped to the radio resource to CP addition section 105.

CP addition section 105 adds the CP to the DL signals input from mapping section 104 for each block, as a period (hereinafter, referred to as a "predetermined period") corresponding to a Guard Interval (GI) between the blocks, and outputs the DL signals to transmission section 106. Specifically, CP addition section 105 adds a signal obtained by duplicating a rear end part of the block of the DL signal to a front end of the block or adds a signal obtained by duplicating a front part of the DL signal to the rear end of the block.

Transmission section 106 performs transmission processing such as up-conversion or amplification on the DL signals input from CP addition section 105, and transmits the radio frequency signals (DL signals) through antenna 107.

Reception section 108 performs reception processing such as amplification or down-conversion on the radio frequency signals (UL signals) received by antenna 107, and outputs the UL signals to CP removal section 109.

CP removal section 109 removes the CP from the UL signals input from reception section 108, and outputs the UL signals to control section 110.

Control section 110 separates (demaps) the UL data signals and the DMRSs from the UL signals input from CP removal section 109 based on the scheduling information (the resource allocation of the UL) input from scheduler 101. Control section 110 outputs the UL data signals to demodulation and decoding section 112, and outputs the DMRSs to channel estimation section 111.

Channel estimation section 111 performs channel estimation by using the DMRSs of the UL signals, and outputs a channel estimation value which is an estimation result to demodulation and decoding section 112.

Demodulation and decoding section 112 performs demodulation and decoding processing on the UL data signals input from control section 110 based on the channel estimation value input from channel estimation section 111. Demodulation and decoding section 112 transmits the demodulated UL data signals to an application section (not illustrated). Note that, the application section performs processing related to a layer higher than a physical layer or a MAC layer.

### <User Terminal>

FIG. 2 is a block diagram illustrating an example of the entire configuration of user terminal 20 according to the present embodiment. User terminal 20 illustrated in FIG. 2 includes antenna 201, reception section 202, CP removal section 203, control section 204, channel estimation section 205, demodulation and decoding section 206, transmission signal generation section 207, coding and modulation section 208, mapping section 209, CP addition section 210, and transmission section 211.

Reception section 202 performs reception processing such as amplification or down-conversion on the radio frequency signals (DL signals) received by antenna 201, and outputs the DL signals to CP removal section 203. At least the DL data signals, the DL control signals, and the DMRSs are included in the DL signals.

CP removal section 203 removes the CP added for each block from the DL signals input from reception section 202. CP removal section 203 outputs the DL signals from which the CP is removed to control section 204.

Note that, CP removal section203 may input the DL signals to control section 204 for each block. In this case, the signal processing on the DL signals in each of the following configurations may be performed by using the block as one processing unit, for example.

Control section 204 separates (demaps) the DL control signals and the DMRSs from the DL signals input from CP removal section 203. Control section 204 outputs the DL control signals to demodulation and decoding section 206, and outputs the DMRSs to channel estimation section 205.

Control section 204 separates (demaps) the DL data signals from the DL signals based on the scheduling information (for example, the resource allocation information of the DL) input from demodulation and decoding section 206, and outputs the DL data signals to demodulation and decoding section 206.

Channel estimation section 205 performs channel estimation by using the separated DMRSs, and outputs a channel estimation value which is an estimation result to demodulation and decoding section 206.

Demodulation and decoding section 206 demodulates the DL control signals input from control section 204. Demodulation and decoding section 206 performs decoding processing (for example, blind detection processing) on the demodulated DL control signals. Demodulation and decoding section 206 outputs the scheduling information (the resource allocation of the DL/UL) addressed to the user terminal which is obtained by decoding the DL control signals to control section 204 and mapping section 209, and outputs the MCS information for the UL data signals to coding and modulation section 208.

Demodulation and decoding section 206 performs demodulation and decoding processing on the DL data signals input from control section 204 by using the channel estimation value input from channel estimation section 205 based on the MCS information for the DL data signals included in the DL control signals input from control section 204. Demodulation and decoding section 206 transmits the demodulated DL data signals to an application section (not illustrated). Note that, the application section performs processing related to a layer higher than a physical layer or a MAC layer.

Transmission signal generation section 207 generates the transmission signals (the UL data signals or the UL control signals), and outputs the generated transmission signals to coding and modulation section 208.

For example, coding and modulation section 208 performs coding processing and modulation processing on the transmission signals input from transmission signal generation section 207 based on the MCS information input from demodulation and decoding section 206. Coding and modulation section 208 outputs the modulated transmission signals to mapping section 209.

Mapping section 209 maps the transmission signals input from coding and modulation section 208 to a predetermined radio resource based on the scheduling information (the resource allocation of the UL) input from demodulation and decoding section 206. Mapping section 209 maps the reference signals (for example, the DMRSs) to a predetermined radio resource based on the scheduling information.

Mapping section 209 outputs the UL signals mapped to the radio resource to CP addition section 210.

CP addition section 210 adds the CP to the UL signals input from mapping section 209, and outputs the UL signals to transmission section 211.

Transmission section 211 performs transmission processing such as up-conversion or amplification on the UL signals (including at least the UL data signals and the DMRSs) input from CP addition section 210, and transmits the radio frequency signals (UL signals) through antenna 201.

### <Configurations of Physical Control Channels and Physical Data Channels>

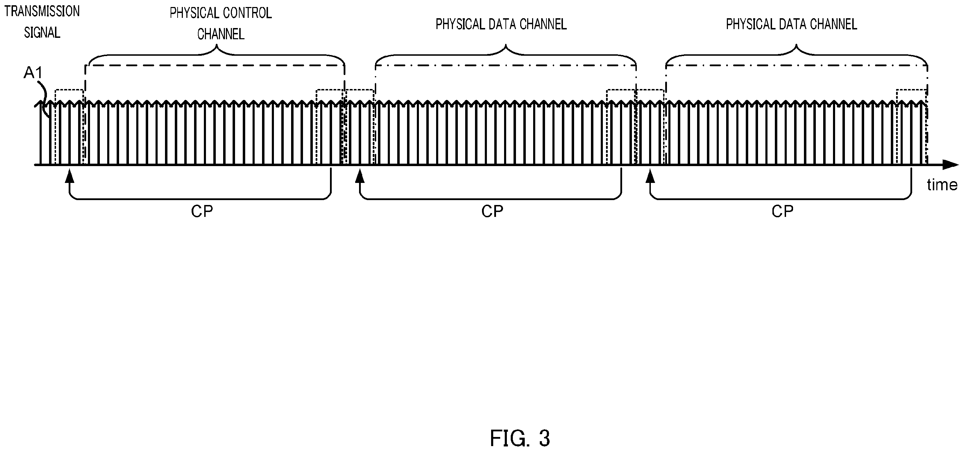

Next, a specific example of the configurations of the physical control channels and the physical data channels according to the present embodiment will be described in detail with reference to FIGS. 3 to 5. Note that, a horizontal axis represents a time axis in FIGS. 3 to 5. Arrows A1 in the transmission signals illustrated in FIGS. 3 to 5 represent transmission points at which the DL signals are transmitted on the single carrier. Hereinafter, the transmission points represented by the arrows A1 may be referred to as sample points. An interval between the sample points is "1/system bandwidth," for example. Note that, the transmission points represented by the arrows A1 may also be referred to as subcarriers, tones, resource elements, components, symbols, mini symbols, or samples. That is, the transmission points represented by the arrows A1 are not limited to the name of the sample points. The transmission points are not limited to the names described above.

Note that, hereinafter, the transmission/reception of the signals included in the physical control channels is appropriately described as the transmission/reception of the physical control channels. Similarly, the transmission/reception of the signals included in the physical data channels is appropriately described as the transmission/reception of the physical data channels.

FIG. 3 is a diagram illustrating an example of the configuration of the transmission signals including the physical control channels and the physical data channels. In the configuration illustrated in FIG. 3, one period separated by the CP is referred to as one symbol.

In the configuration illustrated in FIG. 3, the physical control channels or the physical data channels are transmitted for each symbol. This configuration is, for example, the configuration of the transmission signals in the time domain on which OFDM modulation is performed adopted in the specification of LTE.

As in the example of FIG. 3, in the case of the transmission signals in the time domain on which the OFDM modulation is performed adopted in the specification of LTE is performed, since the length of the physical control channels and the physical data channels are fixed by transmitting the physical control channels or the physical data channels for each symbol of the OFDM, it is not possible to adopt a flexible configuration in which a ratio between the physical control channels and the physical data channels is changed, and thus, there is a concern that a frequency utilization efficiency will be decreased.

Meanwhile, in the case of the single carrier, since a signal is not mapped to each subcarrier in the frequency domain as in the OFDM and a signal is mapped in the time domain, it is not necessary to divide the physical control channels and the physical data channels by an integral multiple of one symbol length, and thus, it is possible to flexibly map the channel in one block corresponding to one symbol of the OFDM.

Thus, a configuration in which the length and/or allocation of the physical control channels or the physical data channels in one block are changed is adopted in the present embodiment.

### [First Example]

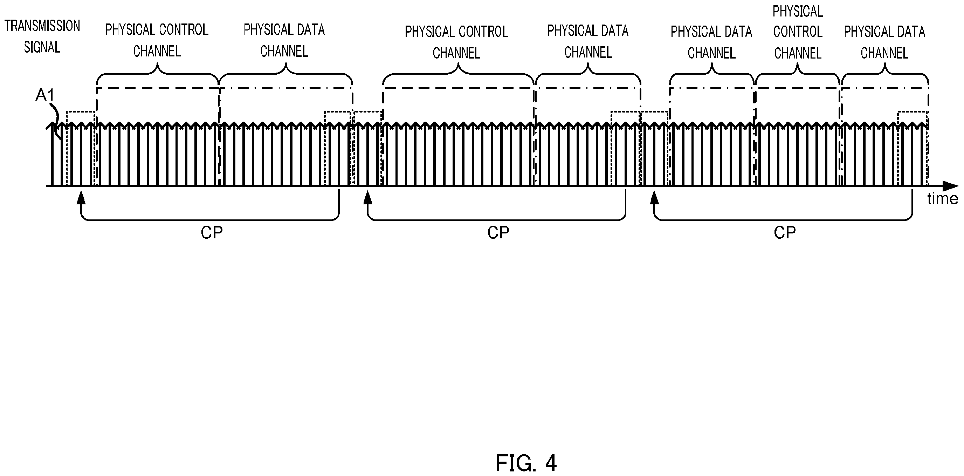

FIG. 4 is a diagram illustrating the configuration of transmission signals according to a first example of the present embodiment. As illustrated in FIG. 4, in the first example of the present embodiment, the physical control channels to which the DL control signals are mapped and the physical data channels to which the DL data signals are mapped are included in the block separated by the CP.

The length and allocation of the physical control channels and the length and allocation of the physical data channels are changed for each block. For example, the physical control channels may be allocated in a beginning part of the block, or may be allocated in a position (for example, an end part) other than the beginning part. The physical data channels may be divided and allocated in one block.

For example, scheduler 101 of radio base station 10 configures the length and allocation of the physical control channels and the physical data channels according to requirements (for example, a communication speed, communication capacity, and a delay time of the system, and the number of user terminals 20 connected to radio base station 10) of the radio communication system.

For example, scheduler 101 configures the length and allocation of the physical control channels and the physical data channels in one block according to data quantity (for example, the sizes of the DL control signals and/or the DL data signals) addressed to user terminal 20. Scheduler 101 performs the scheduling of the DL signals in the configured transmission periods. Information (hereinafter, configuration information) indicating the length and allocation of the physical control channels and the physical data channels are notified to user terminal 20 from radio base station 10.

When the DL signals transmitted from radio base station 10 are received, user terminal 20 removes the CP, and performs demodulation processing and decoding processing. Demodulation and decoding section 206 of user terminal 20 specifies the allocation and length of the physical control channels in each block of the DL signals based on the configuration information, and performs the demodulation processing and the decoding processing on the DL control signals mapped to the specified physical control channel. Demodulation and decoding section 206 performs the demodulation processing and the decoding processing on the DL data signals mapped to the specified physical data channels in the same block as the DL control signals by using the DL control signals.

### <Advantageous Effects of First Example>

In the aforementioned first example, radio base station 10 can flexibly change the configurations (for example, the length and/or allocation) of the physical control channels and the physical data channels. Accordingly, it is possible to change a ratio between the physical control channels and the physical data channels according to requirements such as a communication speed required by user terminal 20, and it is possible to perform appropriate communication.

Note that, although it has been described in the aforementioned first example that the physical control channels and the physical data channels are included on each block of the DL signals with reference to FIG. 4, a block including only the physical control channels and a block including only the physical data channels may be provided together. For example, a plurality of blocks included in the DL signals may include a block including the physical control channels and the physical data channels and the block including only the physical control channels or only the physical data channels.

Note that, although the DL signals transmitted by radio base station 10 to user terminal 20 have been described as the example in the aforementioned first example, the present invention is not limited thereto. The aforementioned first example may be applied to the UL signals transmitted by user terminal 20 to radio base station 10.

### [Second Example]

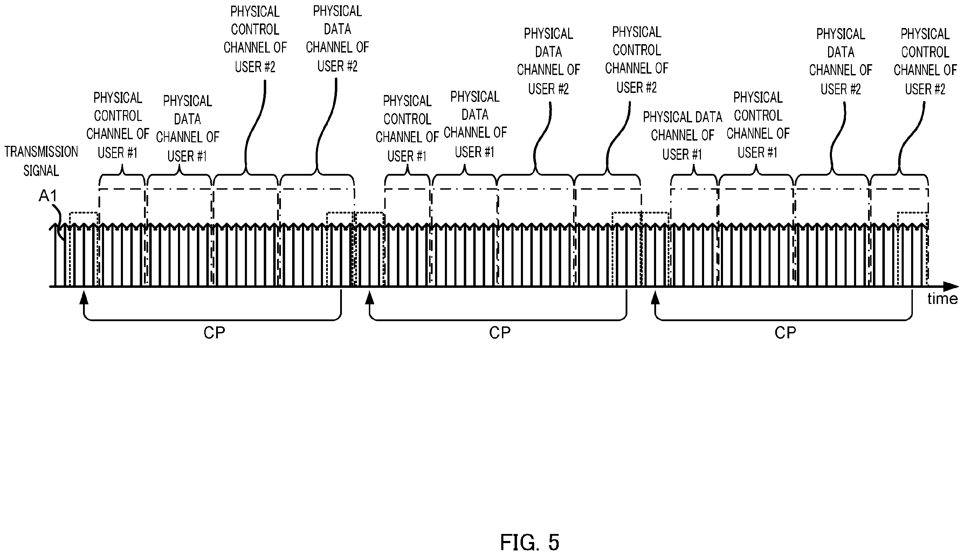

FIG. 5 is a diagram illustrating the configuration of transmission signals according to a second example of the present embodiment. A second example is an example in which radio base station 10 performs time-division multiplexing on the transmission signals (the DL signals) for a plurality of user terminals 20 (users #1 and #2) in one block in the time domain.

Specifically, the physical control channels and the physical data channels of user #1 and the physical control channels and the physical data channels of user #2 are included in the block separated by the CP, as the transmission signals. The DL control signals addressed to user #1 and the DL data signals addressed to user #1 are mapped to the physical control channels and the physical data channels of user #1, respectively. The DL control signals addressed to user #2 and the DL data signals addressed to user #2 are mapped to the physical control channels and the physical data channels of user #2, respectively.

As illustrated in FIG. 5, the length and allocation of the physical control channels and the length and allocation of the physical data channel are changed for each block and each user terminal 20. For example, the physical control channel of each user terminal 20 may be allocated in a beginning part of the block, or may be allocated in a position (for example, an end part) other than the beginning part.

For example, scheduler 101 of radio base station 10 configures the length and allocation of the physical control channel and the physical data channel according to requirements (for example, a communication speed, communication capacity, and a delay time of the system, and the number of user terminals 20 connected to radio base station 10) of the radio communication system.

For example, scheduler 101 configures the length and allocation of the physical control channels and the physical data channels in one block according to data quantity (for example, the sizes of the DL control signals and/or the DL data signals) addressed to each user terminal 20. Scheduler 101 performs the scheduling of the DL signals addressed to each user terminal 20 in the configured transmission period. Configuration information indicating the length and allocation of the physical control channels and the physical data channels are notified to each user terminal 20 from radio base station 10.

When the DL signals transmitted from radio base station 10 are received, each user terminal 20 removes the CP, and performs the demodulation processing and the decoding processing. Demodulation and decoding section 206 of each user terminal 20 specifies the allocation and length of the physical control channels in each block of the DL signals based on the configuration information, and performs the demodulation processing and the decoding processing on the DL control signals mapped to the specified physical control channels. Demodulation and decoding section 206 performs the demodulation processing and the decoding processing on the DL data signals mapped to the specified physical data channels in the same block as the DL control signals by using the DL control signals.

### <Advantageous Effects of Second Example>

In the aforementioned second example, radio base station 10 can flexibly change the configurations (for example, the length and/or allocation) of the physical control channels and the physical data channels for each user terminal 20. Accordingly, it is possible to change a ratio between the physical control channels and the physical data channels and/or a ratio between the channels allocated to each user terminal 20 according to requirements such as a communication speed required by each user terminal 20, and it is possible to perform appropriate communication.

Note that, although it has been described in the aforementioned second example that the physical control channels and the physical data channels of the plurality of user terminals 20 are included in each block of the DL signals with reference to FIG. 5, a block including only the physical control channels of one or the plurality of user terminals 20 or a block including only the physical data channels of one or the plurality of user terminals 20 may be included in the DL signals. Alternatively, a block including the physical control channels and the physical data channels of one user terminal 20 and a block including the physical control channels and the physical data channels of the plurality of user terminals 20 may be included in the DL signals.

Note that, although it has been described in the examples of the present embodiment that the configuration information is notified to user terminal 20, the configuration information may not be notified to user terminal 20. In a case where the configuration information is not notified, user terminal 20 performs monitoring processing (blind decoding processing) on all patterns of the allocation and length of the physical control channels, and obtains the DL control signals.

Although it has been described in each example of the present embodiment that the configuration information indicates the length and allocation of the physical control channels and the physical data channels, the present invention is not limited thereto. For example, when any one of the allocation and the length is known, only the other information may be notified. The configuration information indicating the length and allocation of any one of the physical control channels and the physical data channels is notified, and thus, the length and allocation of the other channels may be specified.

In each example of the present embodiment, the notification method of the configuration information is not particularly limited. For example, the configuration information may be notified in another physical control channels (for example, the physical control channels in the beginning part of the transmission signals or in the beginning part of the symbol). Note that, the configuration information may be notified to each user terminal 20 by higher layer (for example, Radio Resource Control (RRC) or Medium Access Control (MAC)) signaling, or may be notified to each user terminal 20 by physical layer (PHY) signaling.

Although it has been described in the present embodiment that a CP generated by copying a part of the signal is used as a predetermined period, the present invention is not limited thereto, zero padding or a known sequence (unique word) may be used as the predetermined period. The predetermined period may be referred to as a guard interval, a guard time, or a guard period. In the present invention, a length of the predetermined period may be "zero". That is, in the present invention, a terminal end of a signal immediately before a timing of a separation part to which the predetermined period is added and a front end of a signal immediately after the timing may be continuous. In this case, the physical control channels to which the DL control signals are mapped and the physical data channels to which the DL control signals are mapped are also included in the unit period of the transmission signals transmitted from radio base station 10.

Note that, although it has been described in the present embodiment that the physical control channels are the PDCCHs in the downlink and the PUCCHs in the uplink and the physical data channels are the PDSCHs in the downlink and the PUSCHs in the uplink, the present invention is not limited thereto. For example, Control-resource Set (CORESET) may be used as the physical control channels. Although it has been described that the control information is the DCI in the uplink and the UCI in the uplink, the present invention is not limited thereto.

The embodiments of the invention have been described above.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

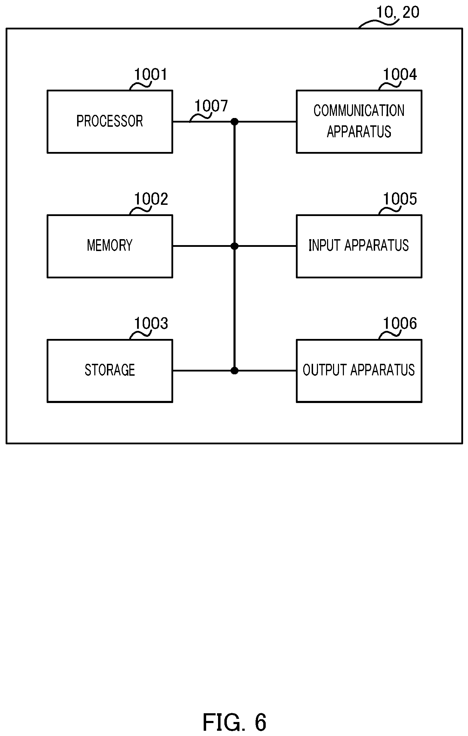

For example, the radio base station, the user terminal, and the like according to the embodiment of the present invention may function as a computer that executes processing of a radio communication method of the present invention. FIG. 6 is a diagram illustrating an example of a hardware configuration of the radio base station and the user terminal according to the embodiment of the present invention. Radio base station 10 and user terminal 20 as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station 10 and of user terminal 20 may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in radio base station 10 and user terminal 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 101, control sections 110 and 204, transmission signal generation sections 102 and 207, coding and modulation sections 103 and 208, mapping sections 104 and 209, channel estimation sections 111 and 205, demodulation and decoding sections 112 and 206, CP addition sections 105 and 210, CP removal sections 109 and 203 described above may be realized by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, scheduler 101 of radio base station 10 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission sections 106 and 210, antennas 107 and 201, reception sections 108 and 202, and the like may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a Digital Signal Processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB, "gNB," " "cell," and "sector" can be interchangeably used in the present specification. The base station may be called a fixed station, a NodeB, an eNodeB (eNB), gNodeB, an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. For example, the DMRS may be referred to as demodulation RS, DM-RS, or the like.

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, the mini slot, and the symbol indicate time units in transmitting signals. The radio frame, the subframe, the slot, the mini slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, one slot may be called a TTI, or one mini slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one mini slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the number of mini slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present invention has been described in detail, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

### Reference Signs List

- 10: Radio Base Station
- 20: User Terminal
- 101: Scheduler
- 102, 207: Transmission signal generation section
- 103, 208: Coding and modulation section
- 104, 209: Mapping section
- 105, 210: CP addition section
- 106, 211: Transmission section
- 107, 201: Antenna
- 108, 202: Reception section
- 109, 203: CP removal section
- 110, 204: Control section
- 111, 205: Channel estimation section
- 112, 206: Demodulation and decoding section

## Claims

1. A user terminal, comprising:
a reception section that receives a downlink signal including a downlink control signal and a downlink data signal from a radio base station; and
a demodulation and decoding section that performs demodulation and decoding on the downlink data signal, using the downlink control signal, wherein
the downlink signal is divided into a plurality of unit periods each serving as a unit in which the demodulation and decoding section performs processing,
the plurality of unit periods include a specific unit period to which the downlink control signal and the downlink data signal are mapped, and
the demodulation and decoding section performs the demodulation and decoding on the downlink data signal mapped to the specific unit period, using the downlink control signal mapped to the specific unit period.

2. The user terminal according to claim 1, wherein:
the downlink signal includes a predetermined period which separates between the plurality of unit periods, and
the predetermined period is any one of zero padding, a known sequence, and a cyclic prefix which is obtained by duplicating a part of the unit period and is added to a front part and/or a rear part of the unit period.

3. The user terminal according to claim 1 or 2, wherein:
the specific unit period includes the downlink control signal and the downlink data signal addressed to the user terminal and the downlink control signal and the downlink data signal addressed to a user terminal different from the user terminal, and
the demodulation and decoding section performs the demodulation and decoding on the downlink data signal addressed to the user terminal and mapped to the specific unit period, using the downlink control signal addressed to the user terminal and mapped to the specific unit period.

4. The user terminal according to any one of claims 1 to 3, wherein
the demodulation and decoding section performs the demodulation and decoding on the downlink control signal mapped to the specific unit period, based on information indicating mapping of the downlink control signal which is notified from the radio base station.

5. The user terminal according to any one of claims 1 to 3, wherein:
the downlink control signal is mapped to the specific unit period based on any one of a plurality of known mapping patterns, and
the demodulation and decoding section performs blind decoding on the downlink control signal mapped to the specific unit period based on each of the plurality of mapping patterns.

6. A radio communication method, comprising:
receiving a downlink signal including a downlink control signal and a downlink data signal from a radio base station; and
performing demodulation and decoding on the downlink data signal, using the downlink control signal, wherein
the downlink signal is divided into a plurality of unit periods each serving as a unit in which processing of the demodulation and decoding is performed,
the plurality of unit periods include a specific unit period to which the downlink control signal and the downlink data signal are mapped, and
the demodulation and decoding are performed on the downlink data signal mapped to the specific unit period, using the downlink control signal mapped to the specific unit period.
